Europäisches Patentamt

European Patent Office

Office européen des brevets

(11) Publication number: **0 354 526 A2**

## EUROPEAN PATENT APPLICATION

(21) Application number: 89114630.0

(22) Date of filing: 08.08.89

(51) Int. Cl.4: **C08L 97/00** , **E04B 5/00** , **E04B 1/82**

(30) Priority: 10.08.88 CA 574542

(43) Date of publication of application:
14.02.90 Bulletin 90/07

(84) Designated Contracting States:
AT BE CH DE ES FR GB GR IT LI LU NL SE

(71) Applicant: Leclerc, Jacques
9407 rue Bellerive
Montreal Quebec H1L 3S8(CA)

Applicant: Leclerc, André
466, 70ième Avenue Apt. 4
Chomedey Laval H7V 2P9(CA)

(72) Inventor: Leclerc, Jacques
9407 rue Bellerive
Montreal Quebec H1L 3S8(CA)
Inventor: Leclerc, André
466, 70ième Avenue Apt. 4
Chomedey Laval H7V 2P9(CA)

(74) Representative: Rackette, Karl, Dipl.-Phys.
Dr.-Ing
Kaiser-Joseph-Strasse 179 Postfach 1310
D-7800 Freiburg(DE)

(54) **Blend of cork for soundproofing floors.**

(57) There is disclosed a moldable mixture which can be used to produce a molded article, such as a panel, having soundproofing properties. The moldable mixture essentially consists of particulate cork, preferably a mixture of rounded and elongated particles whose average size is about 1 centimeter, and an additional material capable of producing a self-contained blend of particulate cork.

EP 0 354 526 A2

The present invention relates to a blend of cork for soundproofing floors. More particularly, the present invention relates to a molded article, such as a panel, having soundproofing properties and obtained by blending particulate cork using a blending material capable of producing a self-contained blend of particulate cork.

The present invention also relates to a mixture which can be used to produce a soundproofing shaped particle as well as a method of obtaining the same.

In the construction business, it is well known that it is of the utmost importance to soundproof floors against the noises produced by impacts and shocks.

There is a product presently available for soundproofing floors which is known under the trade mark Kerafonic. However, this product requires a period of drying which varies between 8 and 15 hours after installation and this obviously stalls all construction during this period. There is therefore a need for a product which is cheaper than Kerafonic, and that does not force the construction to stop, after its installation.

Canadian Patent No. 1,162,729 describes a soundproofing structure which consists of a trellis which is impregnated with a resin. Obviously, this is a complicated structure to produce.

Bresilian Application 77/3,592 of June 2, 1977 published on December 26, 1978 describes acoustic and thermal insulating wall panels made of cork granules or cuttings, polyols, silicones, chlorides and blowing agents.

French Patent No. 1,580,976 describes polymer-containing construction panels which are soundproofing and which include wood fibers, cork, polystyrene granules, or rubber scrap with plaster or portland cement.

French Patent No. 1,557,865 describes a material for sound insulation including wood chips, cork granules, and urea-formaldehyde glue.

French Patent No. 1,468,331 describes an agglomerate for acoustic insulation made of granulated cork, a binder, a hydrophilic substance which holds the water, and silica.

Polish Patent No. 48,361 of June 29, 1964 describes a heat- and sound-insulating material made of Styrofoam, cork powder, polyvinyl acetate and rubber.

The present invention relates to a mixture which can be used to prepare a shaped article such as a panel, having soundproofing properties. The moldable mixture essentially consists of particulate cork and an additional material capable of producing a self-contained blend of the particulate cork. The cork material preferably comprises a mixture of rounded and elongated particles of cork, which are suitably derived from any part of the bark of cork oak.

Generally, the average size of the particulate cork is about 1 centimeter although this can vary to a certain extent as long as fine particles are excluded.

The additional material which can be used to prepare the blend of particulate cork can be any synthetic or natural resin which is well known to those skilled in the art. Although any synthetic resin which can produce a blend can be used, the preferred resin includes a polyurethane, a polyester, an epoxy resin, a phenolic resin, a resorcinal resin, a phenol formaldehyde resin, a urea formaldehyde resin, a polyvinyl acetate or the like. The preferred synthetic resin is urea formaldehyde, such as the resin known under the trademark Perkins L-100. The preferred natural resin is a so-called animal glue derived from fish, bone, blood, etc.

A catalyst is preferably included in the mixture and such catalyst may consist of urea, wood fiber and basic salts which is a brown powder sold under the trademark HF-48. Of course, any other catalyst which would promote an interaction between cork and the material, such as an urea formaldehyde resin, which is capable of producing a self-contained blend of particulate cork, could also be used without departing from the scope and spirit of the present invention. When used with an urea formaldehyde resin, the catalyst such as HF-48 is normally employed in an amount of about 15 volume percent of the urea formaldehyde resin. Any other suitable amount can of course be used as is well known to those skilled in the art.

A soundproofing panel can be prepared from any one of the mixtures defined above as long as the cork is uncompressed. For example, a soundproofing panel can be produced which has a uniform surface in order to constitute an adequate substrate for a flooring to be laid thereover. The thickness of the panel is normally between about 1 and about 5 centimeters.

Panels or blocks of soundproofing material can be produced by any suitable method known to those skilled in the art, provided that the cork is not compressed during the preparation of the panel. However, the following methods have been found to give better satisfaction.

## METHOD I

In a standard mixer, such as a cement mixer, a paste mixture or a continuous helicoidal mixer, particulate cork, and urea formaldehyde containing enough urea as the catalyst are introduced. When the mixture is homogeneous, it is poured in molds. The molds are vibrated so that the particulate cork is uniformly dispersed in the molds. Then the molded material is dried, and this is followed by unmolding. The molded materials are cut into proper sizes and they are ready to be used.

## METHOD II

The cork, the urea formaldehyde and the catalyst are mixed in the same manner as in Method I. Then the mixture is poured on a conveyor belt provided with a rake, enabling it to spread the mixture. The latter is then pressed between two heated rollers in order that the final product be uniform and of desired thickness. Drying is carried out at high frequency and once the product has been dried, it is cut to desired sizes.

Although the final product can vary considerably with respect to dimension and thickness, it has been found desirable to provide panels four feet by eight feet or in the form of tiles of smaller dimension. The thickness can also vary and is normally between about 1 centimeter to about 5 centimeters.

Comparative tests were made to show the performance of panel according to the invention as compared to straight concrete or a layer of Kerafonic.

The panels were made of particulate cork and urea formaldehyde.

To make those tests, the method described in the standard ASTM E989-84 entitled "Standard Classification for Determination of Impact Insulation Class (IIC)".

The tests were made under identical conditions. It will be seen that the panels according to the present invention are much superior to straight concrete and are comparable although slightly superior than the soundproofing obtained by using Kerafonic.

TABLE I

| FREQ. (HZ) | NORMALISED ISPL(dB) CORK (1) | NORMALISED ISPL(dB) CONCRETE (2) | DIFFERENCES (1)-(2) |
|---|---|---|---|
| 100 | 60 | 62 | -2 |
| 125 | 58 | 60 | -2 |
| 160 | 63 | 64 | -1 |
| 200 | 63 | 65 | -2 |
| 250 | 62 | 62 | 0 |
| 315 | 62 | 63 | -1 |
| 400 | 64 | 66 | -2 |
| 500 | 65 | 66 | -1 |
| 630 | 64 | 66 | -2 |
| 800 | 65 | 66 | -1 |
| 1000 | 63 | 66 | -3 |
| 1250 | 60 | 67 | -7 |
| 1600 | 56 | 68 | -12 |
| 2000 | 54 | 69 | -15 |
| 2500 | 50 | 69 | -19 |
| 3150 | 45 | 69 | -24 |

NOTES: - ASSEMBLY (1): TILE WITH PANEL OF HIGH DENSITY CORK BLEND ON 9 INCH CONCRETE SLAB

- ASSEMBLY (2): 9 INCH CONCRETE TILE

- NORMALISED ISPL WITH RESPECT TO ABSORPTION

- THE ACOUSTICAL PERFORMANCE IS INVERSELY PROPORTIONAL TO NORMALIZED ISPL; A NEGATIVE DIFFERENCE MEANS THAT THE ASSEMBLY (1) HAS A BETTER PERFORMANCE THAN ASSEMBLY (2) AND VICE-VERSA.

3

TABLE II

| FREQ.<br>(HZ) | NORMALISED ISPL<br>(dB) KERAFONIC (1) | NORMALISED ISPL<br>(dB) CONCRETE (2) | DIFFERENCES<br>(1)-(2) |
|---|---|---|---|
| 100 | 60 | 62 | -2 |
| 125 | 58 | 60 | -2 |
| 160 | 62 | 64 | -2 |
| 200 | 63 | 65 | -2 |
| 250 | 61 | 62 | -1 |
| 315 | 62 | 63 | -1 |
| 400 | 63 | 66 | -3 |
| 500 | 64 | 66 | -2 |
| 630 | 63 | 66 | -3 |
| 800 | 63 | 66 | -3 |
| 1000 | 62 | 66 | -4 |
| 1250 | 61 | 67 | -6 |
| 1600 | 60 | 68 | -8 |
| 2000 | 56 | 69 | -13 |
| 2500 | 57 | 69 | -12 |
| 3150 | 58 | 69 | -11 |

NOTES: - ASSEMBLY (1): TILE WITH LAYER OF $\frac{1}{2}$ INCH ON CONCRETE SLAB 9 INCH

- ASSEMBLY (2): CONCRETE SLAB 9 INCH

- NORMALISED ISPL WITH RESPECT TO ABSORPTION

- THE ACOUSTICAL PERFORMANCE IS INVERSELY PROPORTIONAL TO NORMALIZED ISPL; A NEGATIVE DIFFERENCE MEANS THAT THE ASSEMBLY (1) HAS A BETTER PERFORMANCE THAN ASSEMBLY (2) AND VICE-VERSA.

TABLE III

| FREQ. (HZ) | NORMALISED ISPL CORK (1) | NORMALISED ISPL KERAFONIC (2) | DIFFERENCES (1)-(2) |
|---|---|---|---|
| 100 | 60 | 60 | 0 |
| 125 | 58 | 58 | 0 |
| 160 | 63 | 62 | 1 |
| 200 | 63 | 63 | 0 |
| 250 | 62 | 61 | 1 |
| 315 | 62 | 62 | 0 |
| 400 | 64 | 63 | 1 |
| 500 | 65 | 64 | 1 |
| 630 | 64 | 63 | 1 |
| 800 | 65 | 63 | 2 |
| 1000 | 63 | 62 | 1 |
| 1250 | 60 | 61 | -1 |
| 1600 | 56 | 60 | -4 |
| 2000 | 54 | 56 | -2 |
| 2500 | 50 | 57 | -7 |
| 3150 | 45 | 58 | -13 |

NOTES: - ASSEMBLY (1): TILE WITH PANEL OF HIGH DENSITY CORK BLEND ON 9 INCH CONCRETE SLAB

- ASSEMBLY (2): TILE WITH LAYER ON CONCRETE SLAB 9 INCH

- NORMALISED ISPL WITH RESPECT TO ABSORPTION

- THE ACOUSTICAL PERFORMANCE IS INVERSELY PROPORTIONAL TO NORMALIZED ISPL; A NEGATIVE DIFFERENCE MEANS THAT THE ASSEMBLY (1) HAS A BETTER PERFORMANCE THAN ASSEMBLY (2) AND VICE-VERSA.

**Claims**

1. A mixture capable of producing a shaped article having soundproofing properties, said moldable mixture essentially comprising particulate cork and an additional material capable of producing a self-contained blend of said particulate cork.

2. A mixture according to claim 1, wherein said particulate cork comprises a mixture of rounded and elongated particles of cork.

3. A mixture according to claim 1, wherein said particulate cork is derived from any part of bark or cork oak.

4. A mixture according to claim 1, wherein said average size of the particulate cork is about 1 centimeter.

5. A mixture according to claim 1, wherein said additional material comprises at least one synthetic resin.

6. A mixture according to claim 1, wherein said additional material comprises a natural resin.

7. A mixture according to claim 5 wherein said synthetic resin is selected from the group consisting of a polyurethane, a polyester, an epoxy resin, a phenolic resin, a resorcinal resin, a phenol formaldehyde resin, a urea formaldehyde resin, a polyvinyl acelate.

8. A mixture according to claim 6, wherein said natural resin consists of an animal glue.

9. A mixture according to claim claim 7, wherein said synthetic resin comprises urea formaldehyde.

10. A mixture according to claim 1, wherein said mixture comprises a catalyst.

11. A mixture according to claim 9, wherein said catalyst consists of the product known under the trademark HF-48.

12. A mixture according to claim 10, which comprises about 10 parts particulate cork and about 1 part

5

of urea formaldehyde, said urea formaldehyde having integrated therein 15 volume percent of a catalyst.

13. A soundproofing panel obtaining by shaping a mixture according to claims 1, 2 or 3.

14. A soundproofing panel obtained by shaping a mixture according to claims 4, 5 or 6, wherein said cork is uncompressed.

15. A soundproofing panel obtained by shaping a mixture according to claims 7, 8 or 9, wherein said cork is uncompressed.

16. A soundproofing panel obtained by a mixture according to claims 10, 11 or 12, wherein said cork is uncompressed.

17. A soundproofing panel having a uniform surface and whose thickness is within a range between about 1 and 5 centimeters, obtained by shaping a mixture according to claims 1, 7 or 12, wherein said cork is uncompressed.

18. Method of producing a soundproofing panel which comprises mixing particulate cork with a natural or synthetic resin capable of producing a self-contained blend of said particulate cork, heating the mixture essentially without compressing said cork and forming panels thereof.

19. Method according to claim 18, wherein the panels are formed by molding.

20. Method according to claim 18, wherein the panels are formed by shaping the mixture between theated rollers.